# EUROPÄISCHE PATENTSCHRIFT

(11) **EP 3 963 247 B1**
(45) Veröffentlichungstag und Bekanntmachung des Hinweises auf die Patenterteilung: **10.01.2024**
(21) Anmeldenummer: 20735269.1
(22) Anmeldetag: 04.05.2020
(51) Int. Cl.: F16L 55/033, F16L 57/04, F01N 13/00, F02B 77/11, B60R 13/08, F16L 59/08

(54) **ABSCHIRMSTRUKTUR**
SHIELDING STRUCTURE
STRUCTURE DE PROTECTION

(30) Priorität: 02.05.2019 DE 102019111404
(43) Veröffentlichungstag der Anmeldung: 09.03.2022
(73) Patentinhaber: ElringKlinger AG, 72581 Dettingen/Erms (DE)
(72) Erfinder: HUBERT, Andreas, 72581 Dettingen/Erms (DE); SCHÖLZEL, Peter, 72581 Dettingen/Erms (DE)
(74) Vertreter: Schmidt, Axel
(86) Internationale Anmeldenummer: PCT/EP2020/062352
(87) Internationale Veröffentlichungsnummer: WO 2020/221941

(56) Entgegenhaltungen:
- EP-A1- 1 905 653
- EP-A2- 1 995 120
- DE-A1-102008 003 721
- KR-B1- 101 817 759

## Beschreibung

Die vorliegende Erfindung betrifft eine Abschirmstruktur zum Abschirmen eines Gegenstandes gegen Hitze und/oder Schall, wobei die Abschirmstruktur eine dem Gegenstand zugewandte Innenoberfläche und eine dem Gegenstand abgewandte Außenoberfläche aufweist.

Aus dem Stand der Technik sind diverse Bauformen von Abschirmstrukturen bekannt, z.B. als Hitzeschilde. Ebenfalls sind Abschirmstrukturen bekannt, die neben einer Temperaturdämmung auch eine akustische Dämmung aufweisen. Eine akustische Wirksamkeit von Abschirmstrukturen kann durch Einbringen von Isoliermaterial realisiert und in Kombination mit offenporigen schallzugewandten Blechlagen noch verstärkt werden. In anderen Frequenzbereichen ist hingegen eine höhere Steifigkeit einer Abschirmstruktur erwünscht, um eine Schallabstrahlung zu mindern. Eine größere mechanische Steifigkeit wird durch Einbringen von Strukturierungen, wie z.B. Sicken, in akustisch relevanten Bereichen erreicht. Damit zielen beide vorstehend beschriebenen Maßnahmen jeweils auf einen bestimmten Frequenzbereich ab, bei dem sie wirken.

DE 10 2008 003 721 A1 offenbart ein Hitzeschild mit einer Abschirmeinrichtung, die zwischen einer Abschirmstellung und einer Heizstellung (durch bewegliche Arme verschieblich ist. Es ist ein eigener aktiver Antrieb durch einen Aktuator als elektrisch, mechanisch, pneumatisch, hydraulisch oder einer Kombination daraus vorgeschlagen, wie auch eine temperaturabhängige Formänderung der Arme.

EP 1 995 120 A2 beschreibt ein Strukturbauteil, das als Hitzeschild bei geringem Platzbedarf sehr gute schall- und auch wärmedämmende Eigenschaften aufweist.

EP 1 905 653 A1 lehrt das Vorsehen eine Öffnung mit einem temperaturabhängig bewegbaren Verschluss an einem Hitzeschild.

KR 101817759 B1 offenbart ein Hitzeschild, das zwei miteinander bereichsweise mittels Epoxyd-Harz verklebte Bleche umfasst. Zwischen einer Doppelplatte aus zwei Metallschichten ist eine Luft-Schicht zur Verbesserung einer Hitze-Abschirmwirkung gebildet.

Nachteilig ist bei bekannten Lösungen, dass entweder mechanische Verbesserungen durch Einbringen von Strukturmaßnahmen auf Kosten einer guten akustischen Effizienz erzielt werden können - was Effekte eher in höheren Frequenzbereichen betrifft, oder gute akustische Wirksamkeiten aufgrund einer biegeweichen Struktur auf Kosten einer mechanischen Festigkeit erreicht werden - mit Wirkung eher in niedrigen Frequenzbereichen. Durch diesen Zielkonflikt können nicht beide Ziele zugleich in zufriedenstellendem Maß erreicht werden.

Die vorliegende Erfindung hat die Aufgabe eine Abschirmstruktur zum Abschirmen eines Gegenstandes gegen Hitze und/oder Schall mit verbesserten mechanischen Eigenschaften bereit zu stellen, durch die der oben beschriebene klassische Zielkonflikt zumindest gemildert wird.

Diese Aufgabe wird erfindungsgemäß durch die Merkmale von Anspruch 1 gelöst. Demnach weist die Abschirmstruktur ein Blech mit einer dem Gegenstand zugewandten Innenoberfläche und eine dem Gegenstand abgewandten Außenseite auf und ist dadurch gekennzeichnet, dass eine Innenoberfläche der Abschirmstruktur mit Elementen bestückt ist, die dazu ausgebildet sind, sich oder auch das Blech mit Erreichung mindestens einer vorbestimmten Temperatur zu verformen. Erfindungsgemäß wird dadurch ein Aufbau mit einer Art von thermisch induziertem Umschalten von einer weichen und damit akustisch mehr bedämpfend funktionierender zu einer biegesteifen und durch mechanische Eigenschaften dominierten Struktur erzielt.

Vorteilhafte Weiterbildungen sind Gegenstand der Unteransprüche. Demnach ist die Verformung der Elemente und/oder die Verformung der Oberfläche der Abschirmstruktur durch die Elemente als Verrippung ausgebildet. Im erstgenannten Fall bilden die Elemente selber eine Verrippung, im zweitgenannten Fall wird durch die Elemente eine Verrippung der Oberfläche der Abschirmstruktur gebildet, insbesondere die einer inneren Oberfläche bzw. Innenoberfläche. Eine Verrippung kann je nach konstruktiver Ausformung linienförmig verlaufen oder sich auf einen z.B. eher ovalen Bereich der Oberfläche der Abschirmstruktur beschränken, um dort gezielt eine Ausbildung von Schwingungsmoden zu unterdrücken.

In einer bevorzugten Ausführungsform der Erfindung ist eine Verformung der Elemente reversibel. Damit kann mit Erreichung einer Temperatur bzw. eines Temperaturbereichs ein Umschalten zwischen einer relativ weichen und einer eher mechanisch biegesteifen Struktur und wieder zurück erfolgen.

Die Elemente umfassen gemäß einer Ausführungsform der Erfindung Bimetall-Abschnitte, oder die Elemente bilden selber Abschnitte aus Bimetall. Vorzugsweise bestehen die Elemente aus Bimetall-Abschnitten in der Form von Streifen oder länglichen Abschnitten von Streifen. Alternativ oder zusätzlich bilden die Elemente zusammen mit dem Metall des Blechs, an und/oder mit dem sie insbesondere in Form von Streifen fixiert sind, selber ein Bimetall. Von Bimetallen ist bekannt, dass sie sich mit Erreichung mindestens einer vorbestimmten Temperatur fortschreitend und i.d.R. vollständig reversibel verformen können. Je nach Materialauswahl und Dimensionierung sind unterschiedliche Temperaturen für das Einsetzen einer vorbestimmten Verformung einstellbar.

In einer bevorzugten Ausführungsform der Erfindung sind die Elemente zueinander jeweils in einem Abstand im Wesentlichen parallel verlaufend ausgerichtet angeordnet und an oder auf dem Blech fixiert, das die Innenoberfläche der Abschirmstruktur bildet. Die Fixierung erfolgt vorzugsweise an mindestens einer der Längskanten, sie kann aber auch z.B. diagonal über eine Länge eines Streifens oder Abschnitts verlaufen.

Vorteilhafterweise weisen zueinander benachbart angeordnete Elemente eine jeweils entgegengesetzt gerichtete thermisch induzierte Verformung und insbesondere eine Krümmung auf. Damit folgen ab einem vorbestimmten Temperaturbereich benachbart relative Maxima und relative Minima bzw. Berge und Täler zur Steigerung einer mechanischen Aufsteifung einer Flächenstruktur aufeinander.

In einer besonders bevorzugten Ausführungsform der Erfindung sind alle Elemente in einem gleichen Temperaturbereich einer erhöhten Temperatur aktivierbar. Alternativ sind auch aufeinander definiert folgende Temperaturbereiche ausgeführt, um z.B. eine fortschreitende Auffaltung und weiter fortschreitende mechanische Aufsteifungen der Innenoberfläche der Abschirmstruktur zu realisieren.

Vorzugsweise sind die Elemente durch Kaltverschweißung, Vernietung, Verklebung und/oder Verschraubung an dem Blech fixiert. Für den Fachmann ist erkennbar, dass sich Alternativen und mögliche Mischformen von thermisch induzierten Verformungen als Folge einer jeweiligen Fixierung der Elemente auf und/oder an der Oberfläche des Blechs der Abschirmstruktur ergeben. In einem Fall verformt sich nur ein betreffendes Element, in einem anderen Fall wird ein Bereich des Blechs durch das Element mit verformt, wie nachfolgend noch anhand eines Ausführungsbeispiels dargestellt wird.

In einer bevorzugten Ausführungsform der Erfindung ist eine mindestens abschnittsweise linienförmige Fixierung eines Elements oder Streifens an dem Blech vorgesehen. Durch diese Fixierung ist eine Kante des Streifens oder Abschnitts mit dem Blech verbunden. Diese Fixierung ist vorzugsweise punktförmig und/oder in Form kurzer Abschnitte ausgeführt. Alternativ ist eine derartige Fixierung an und auf dem Blech entlang einer Diagonale über den Streifen oder Abschnitt möglich, wie noch anhand der Zeichnung dargestellt.

Alternativ oder zusätzlich werden in einer Ausführungsform der Erfindung auch entsprechende Elemente an einer gegenüberliegenden Oberfläche der Abschirmstruktur vorgesehen. Damit werden dann eine innere und eine äußere Oberfläche eines dem Gegenstand zugewandten Blechs der Abschirmstruktur bestückt.

Vorteilhafterweise sind Streifen an gemeinsamen Positionen an dem Blech fixiert. Diese Anordnung bewirkt eine besonders starke mechanische Versteifung.

Gemäß einer wesentlichen Weiterbildung der Erfindung weist ein Element Einschnitte auf. Diese Einschnitte werden vorzugsweise in Form von Freistanzungen ausgeführt, alternativ als Ätzungen oder als Ergebnis von Laser- oder Wasserstrahl-Schneidprozessen.

In einer bevorzugten Ausführungsform der Erfindung ist eine Freistanzung mindestens im Bereich einer Verbindungskante zu dem Element, das beispielsweise in Form eines Streifen und/oder dem Abschnitt ausgebildet ist, hin durch eine Behandlung oder Bearbeitung dazu ausgebildet, bei einem Übergang in vorbestimmte Bereiche erhöhter Temperatur ϑₕ eine dreidimensionale bzw. 3D-Auffaltung gegenüber dem Blech und/oder dem Streifen oder dem Abschnitt zu bewirken. Eine mechanische Versteifung ist gemäß dieser Ausführungsform vorteilhafterweise so mit einer noch weiteren Vergrößerung einer freien Oberfläche verbunden. Diese Vergrößerung der Oberfläche wirkt zudem nach Art eines Labyrinths. Damit treten zu einer geänderten mechanischen Eigenschaft eine verbesserte Wärmeabfuhr mit erhöhter akustischer Dämpfung hinzu, die über eine Dimensionierung der Einschnitte und/oder Form der mindestens einen Freistanzung o.ä. einstellbar sind, insbesondere in Abstimmung auf bestimmte Frequenzen.

Dem Fachmann ist verständlich, dass je nach Anwendungsfall und Betrachtungsweise die vorstehend gewählten Begriffe "Innenoberfläche" und "Außenseite" gegeneinander mit Blick auf ein technisch zu erreichendes Ziel austauschbar sind. So kann eine akustische Bedämpfung nach Innen gerichtet sein, aber auch nach außen eine akustische Abstrahlung gemindert werden. Eine vergrößerte Oberfläche kann nach Innen gerichtet eine Entwärmung eines benachbarten Gegenstands fördern, nach außen hin gerichtet eine Wärmeabgabe durch freie oder erzwungene Konvektion verbessern. In diesem Sinne kann eine Innenoberfläche zu einer Außenseite werden und umgekehrt, abhängig von einem Ort eines erwünschten technischen Effekts gemäß der vorliegenden Erfindung.

Nachfolgend werden weitere Merkmale und Vorteile erfindungsgemäßer Ausführungsformen unter Bezugnahme auf Ausführungsbeispiele anhand der Zeichnung näher erläutert. Darin zeigen in schematischer Darstellung:
- Figur 1:: eine Draufsicht auf eine Außenseite einer Abschirmstruktur;
- Figur 2:: eine Schnittdarstellung in einer Ebene A-A von Figur 1;
- Figur 3:: die Schnittdarstellung von Figur 2 bei erhöhter Temperatur;
- Figur 4:: eine Alternative zu dem Aufbau gemäß Figur 3 bei erhöhter Temperatur;
- Figur 5:: ein weiteres Ausführungsbeispiel als Alternative zu dem Aufbau der Figur 2 bei erhöhter Temperatur;
- Figur 6:: ein Ausführungsbeispiel als Alternative zu dem Aufbau der Figuren 1 und 2 bei erhöhter Temperatur;
- Figur 7:: ein alternatives Ausführungsbeispiel als Abwandlung von Figur 6 bei erhöhter Temperatur;
- Figuren 8a bis 8d:: alternative Ausführungsbeispiele als Abwandlungen der Ausführungsbeispiele der Figuren 3 und 4 in einer Draufsicht analog Figur 1 und als Schnittdarstellung bei erhöhter Temperatur;
- Figur 9:: ein alternatives Ausführungsbeispiel als Abwandlung von Figur 8a und
- Figuren 10a, 10b:: ein weiteres alternatives Ausführungsbeispiel als Abwandlung der Ausführungsbeispiele der Figur 8a in einer Draufsicht analog Figur 1 und als Darstellung einer Schnittebene E-E bei erhöhter Temperatur.

Über die verschiedenen Abbildungen und Ausführungsbeispiele hinweg werden für gleiche Elemente stets die gleichen Bezugszeichen verwendet.

Die nun beschriebenen erfindungsgemäßen Ausführungsformen zeigen alle eine Abschirmstruktur 1 zum Abschirmen eines nicht weiter dargestellten Gegenstandes gegen Hitze und/oder Schall in einem Kraftfahrzeug. Eine solche Abschirmstruktur 1 kann beliebige auch dreidimensionale Formen aufweisen und wird hier ohne Beschränkung und nur der Einfachheit halber als rechteckiges Element dargestellt. Dieses rechteckige Element stellt im Fall einer mehrschichtig aufgebauten Abschirmstruktur ein dem abzuschirmenden Gegenstand zugewandtes Blech 2 dar.

Ein regulärer Fahrbetrieb in einem unteren Fahrzeuggeschwindigkeitsbereich des Kraftfahrzeugs mit Antrieb durch eine oder Betrieb einer Verbrennungskraftmaschine geht meist mit niedrigeren Verbrennungstemperaturen und daher kleinen thermischen Lasten der Bauteile einher. In diesen Frequenzbereichen ist es aber besonders wichtig, eine gut wirkende akustische Maßnahme durch die Abschirmstruktur 1 bereitzustellen, da der Anteil der Schallabstrahlung verbrennungsmotorischer Geräusche eine hohe Gewichtung gegenüber einem z.B. durch Abrollgeräusche der Reifen, Windgeräusche etc. hervorgerufenen Gesamtgeräuschniveau in einem solchen Fahrbetrieb hat. Alternative Antriebskonzepte zeigen ein vergleichbares Verhalten. Für eine wirksame Schalldämmung sind somit biegeweiche Strukturen der Abschirmstruktur 1 mit hoher flächenbezogener Masse zu bevorzugen. Eine akustische Wirksamkeit von Abschirmteilen kann durch Einbringen von Isoliermaterial in Kombination mit offenporigen und/oder mechanisch weichen schallzugewandten Blechlagen realisiert werden.

Ändert sich jedoch der Fahrbetrieb hin zu einem höher beaufschlagten Lastfall in einem höheren Geschwindigkeits- und damit auch höheren Verbrennungsmotorlastbereich sind gute Eigenschaften hinsichtlich Steifigkeit und Strukturdynamik bei der Abschirmstruktur 1 wünschenswert und auch hinsichtlich einer Betriebsfestigkeit zu bevorzugen. Eine größere mechanische Steifigkeit wird z.B. durch Einbringen von Strukturierungen z.B. in Form von Sicken in relevanten Bereichen erreicht.

Beide vorstehend beschriebenen Maßnahmen zielen damit jeweils auf einen bestimmten Frequenzbereich in einem jeweiligen Anwendungs-Szenario ab. Erfindungsgemäß wird nun eine Lösung zur Vereinbarung dieser Maßnahmen in Form einer Kombination von akustischen mit mechanischen Eigenschaften mit einem Wechsel dieser Eigenschaften geschaffen, der einem jeweiligen Anwendungs-Szenario entsprechend ausgebildet ist und durch eine jeweilige Temperatureinwirkung gesteuert wird. Dieser Wechsel der mechanischen Eigenschaften unter Temperatureinwirkung kann somit während des Betriebs in unterschiedlichen Fahr-Modi gezielt zur Beeinflussung der Abschirmstruktur 1 und somit zugleich auch als akustisch wirksame Funktion genutzt werden, die auch eine mechanische Anregung der Abschirmstruktur 1 mit störender Abstrahlung von Schall als zusätzlichem Geräusch mindert.

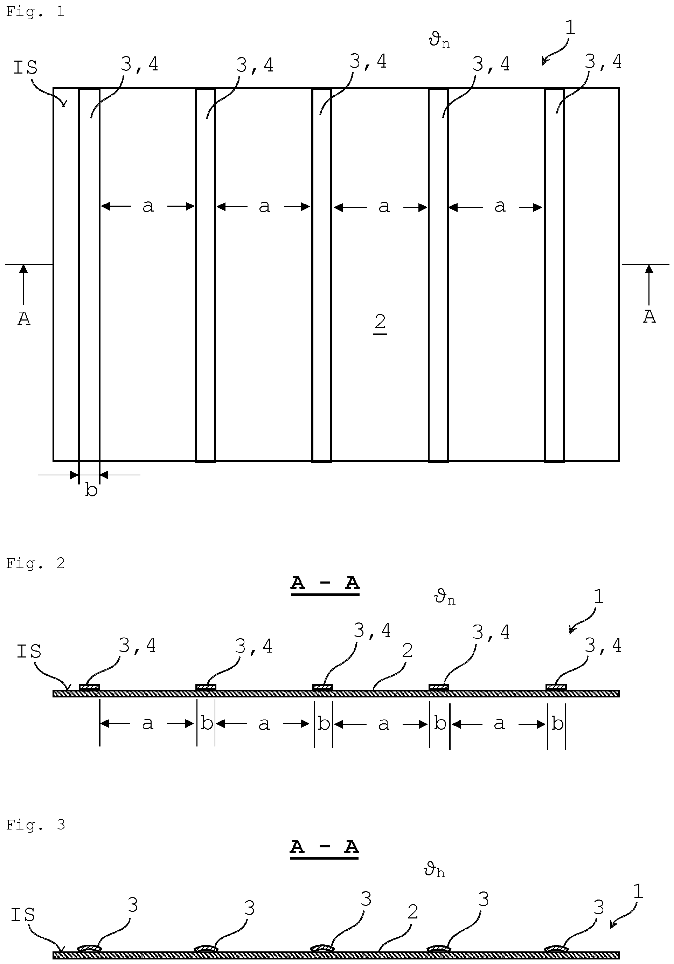

Die Abschirmstruktur 1 weist dazu eine dem nicht weiter dargestellten Gegenstand zugewandten Innenoberfläche IS und eine dem Gegenstand abgewandten Außenseite AS auf. Figur 1 zeigt nun eine Draufsicht auf eine Oberfläche eines metallischen Blechs 2 als Innenoberfläche IS der Abschirmstruktur 1. Auf dem Blech 2 sind zueinander parallel in einem Abstand a zueinander angeordnete Streifen 3 fixiert. Diese Streifen 3 bestehen in diesem Ausführungsbeispiel aus einem Bimetall, also aus zwei Schichten unterschiedlicher und miteinander stoffschlüssig oder formschlüssig verbundener Metalle. Für einen Bimetall-Streifen charakteristisch ist eine Veränderung seiner Form bei einer Temperaturänderung, die sich aufgrund von unterschiedlichen Wärmeausdehnungskoeffizienten der verwendeten Metalle als mit Temperaturanstieg fortschreitende Verbiegung äußert. Die Verformung eines Bimetalls ist reversibel, so dass auch dieser Vorgang der gezielten Verformung der Streifen etc. umkehrbar und durch entsprechende Temperaturänderungen fast beliebig wiederholbar ist.

Figur 2 stellt eine Schnittdarstellung in einer Ebene A-A von Figur 1 bei einer niedrigen Temperatur ϑₙ dar. Hier sind die sich mit Erreichung mindestens einer vorbestimmten Temperatur ϑₕ verformenden Elemente als Streifen 3 einer Breite b in einem Abstand a zueinander im Wesentlichen parallel verlaufend ausgerichtet angeordnet.

Figur 3 zeigt die Schnittdarstellung von Figur 2 bei einer erhöhten Temperatur ϑₕ, durch die sich die Streifen 3 verformen bzw. zu verformen beginnen. Hier besteht die Verformung darin, dass die Streifen 3 sich senkrecht zu einer Längsachse krümmen und so mit dem Blech 2 verbundene Rippen zur mechanischen Versteifung des mit den Streifen 3 verbundenen Blechs 2 bilden.

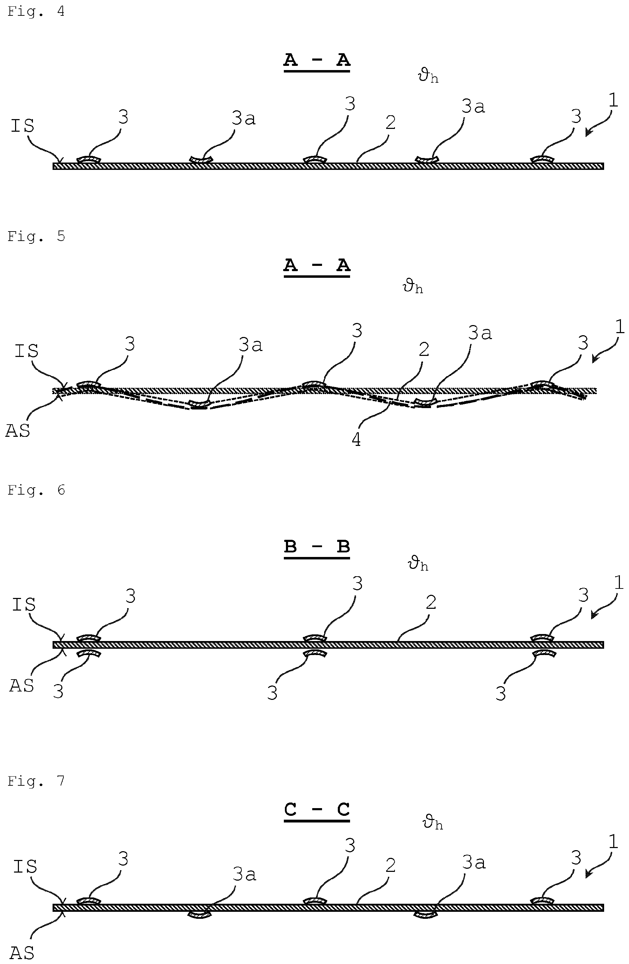

Figur 4 zeigt eine Alternative zu dem Aufbau gemäß der Figuren 2 und 3. Hierin sind Streifen 3, 3a vorgesehen, deren Krümmung bei einer erhöhten Temperatur ϑₕ in wechselnder Anordnung zueinander gegensinnig gerichtet ist. Es ergibt sich in der gewählten Schnittebene so eine Abfolge unterschiedlich geformter Rippen zur Versteifung des Blechs 3.

Figur 5 zeigt ein Ausführungsbeispiel, bei dem die Streifen 3, 3a von Figur 4 nun so an dem Blech 2 fixiert sind, dass das ebene und damit vergleichsweise schallweiche Blech 2 bei der erhöhten Temperatur ϑₕ unter Einwirkung der Streifen 3, 3a selbst einen wellenartigen Querschnitt annimmt, während sich bei der Anordnung von Figur 4 nur die Elemente bzw. Streifen 3, 3a thermisch induziert verformt haben. Ein wellenartiger Querschnitt ist mechanisch und akustisch gegenüber einem ebenen Blech 2 deutlich versteift. Damit wird u.a. auch eine Eigenfrequenz des Blechs 2 verändert, um eine mögliche Resonanz mit einer Verstärkung von Störgeräuschen in günstigere Frequenzbereiche hin zu verschieben, insbesondere außerhalb einer starken Wahrnehmung durch das menschliche Ohr.

Figur 6 stellt ein alternatives Ausführungsbeispiel zu dem Aufbau der Figuren 1 und 2 dar. Hierin sind nun Streifen 3 auf beiden Oberflächen IS, AS des Blechs 2 fixiert. Zur Stärkung der mechanischen Versteifung sind die Streifen 3 an gemeinsamen Positionen an dem Blech 2 fixiert, wie der Schnitt in einer Ebene B-B zeigt. Dabei sind gleichsinnige Krümmungen der Streifen unter Einrichtung der erhöhten Temperatur ϑₕ gewählt worden. Ein Abstand zwischen den Streifen 3 ist hier mehr als verdoppelt worden und kann den Anforderungen eines jeweiligen Anwendungsfalls entsprechend angepasst werden. Insbesondere muss kein regelmäßiger Abstand b zwischen Streifen 3 vorgesehen werden, die für eine Änderung der mechanischen Eigenschaften des Blechs 2 auch nicht zwingend parallel zueinander angeordnet sein und/oder gleiche Breiten b aufweisen müssen.

Im Unterschied zu dem Ausführungsbeispiel von Figur 6 werden in Figur 7 gegensinnige Krümmungen der Streifen 3, 3a verwendet, die gegeneinander versetzt bzw. quasi "auf Lücke" angeordnet sind. Damit ist der Schnitt in einer Ebene C-C einer nicht weiter als Draufsicht dargestellten Anordnung eher dem Ausführungsbeispiel von Figur 4 vergleichbar.

Statt der Verwendung von Streifen 3, 3a aus mindestens einer Bimetall-Kombination kann das Blech 2 auch selber als eine von zwei Schichten unterschiedlicher, miteinander stoffschlüssig oder formschlüssig verbundener Metalle verwendet werden. Dabei werden Paarungen von einem Blech 2 aus Stahl mit Streifen 4 aus Zink oder auch einem Blech 2 aus Stahl in Kombination mit Streifen 4 aus der Legierung Messing verwendet, wie schon in Figur 2 angedeutet. Ferner kennt der Fachmann u.a. unter dem Oberbegriff "Invar" eine Gruppe von Legierungen und Verbindungen, die die bemerkenswerte Eigenschaft besitzen, in bestimmten Temperaturbereichen sehr kleine oder zum Teil sogar negative Wärmeausdehnungskoeffizienten zu haben. Auch derartige Materialien werden ohne weitere zeichnerische Darstellungen für Streifen 4 verwendet. Damit stehen zahlreiche Kombinationen aus mindestens zwei metallischen Komponenten zum Aufbau von Bimetall-Elementen mit unterschiedlichsten Eigenschaften zur Verfügung, die sehr große Kräfte zur Verformung zeigen. Statt einer Ausformung als Streifen 3, 4 können auch dreidimensionale Bauteile, wie z.B. L-, T- oder H-Profile oder gar Bauteile mit rechteckigem Querschnitt aus Metallen mit verschiedenen Wärmeausdehnungskoeffizienten hergestellt und erfindungsgemäß als Teil einer konstruktiven Lösung für einen besonderen Anwendungsfall verwendet werden.

In einem Herstellungsverfahren werden die blanken und von Oxidschichten freien Metalle des Blechs 2 und jeweils eines Streifens 4 unter Druck aufeinander gewalzt. In der Kontaktzone entsteht durch Kaltverschweißung und eine anschließende Diffusionsglühbehandlung eine unlösbare Verbindung zwischen einem Streifen 4 und dem Metall des Blechs 2. Auch Co-Extrusion oder Strangpressen werden als Herstellungsverfahren für Bimetall-Strukturen genutzt. Bei einer anderen Ausführungsform werden zur Herstellung eines Bimetalls an Enden eines Streifen 4 und dem Blech 2 deckungsgleiche Durchgangsbohrungen vorgesehen, durch die der Streifen 4 mit dem Blech 2 vernietet und/oder verschraubt wird. Ohne Bohrungen etc. ist in niedrigeren Temperaturbereichen auch eine Fixierung der Bimetall-Partner durch eine endseitige Verklebung möglich.

Damit können prinzipiell alle vorstehend unter der Verwendung von Streifen 3, 3a aus Bimetall beschriebenen Anordnungen analog nachgebildet werden, insbesondere die von Figur 5.

Nicht weiter zeichnerisch dargestellt sind Variationen z.B. von Figur 7 zur Ausbildung einer Struktur, die der von Figur 5 vergleichbar ist, aber an beiden Oberflächen mit Streifen 3, 3a bestückt ist. Auch sind vorstehend nur Ausführungsbeispiele mit einer einzigen erhöhten Temperatur ϑₕ oder einem Temperaturbereich einer fortschreitenden Verformung vorgesehen, was eine Verwendung mehrerer unterschiedlicher Temperaturbereiche für voneinander getrennte Verformungen an dem Blech 2 ermöglicht und dem Fachmann als weiteres konstruktives Mittel anbietet.

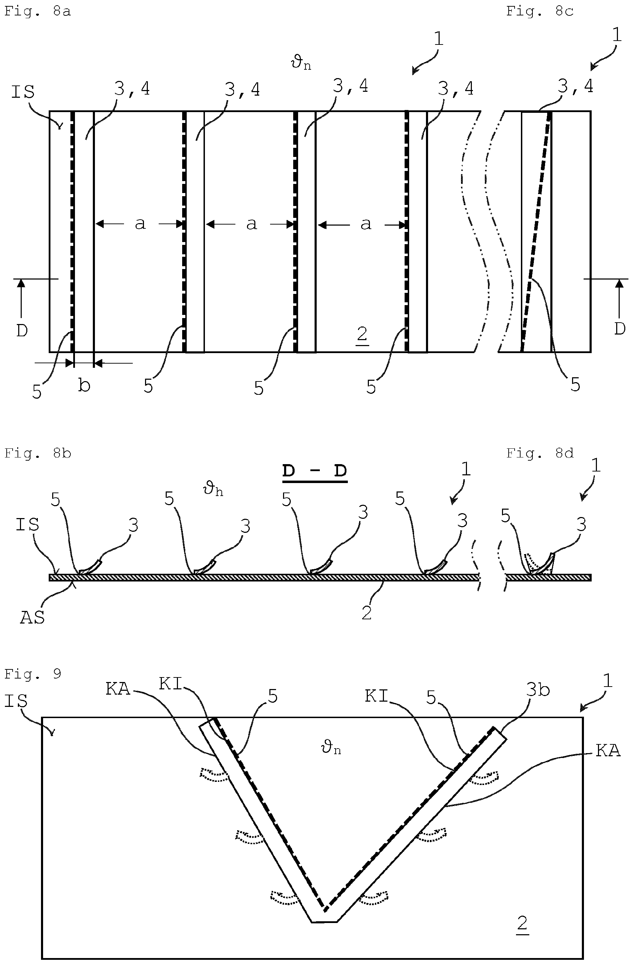

Die Abbildungen der Figuren 8a, 8b zeigen ein alternatives Ausführungsbeispiel als Abwandlung der Ausführungsbeispiele der Figur 3 und 4 in einer Draufsicht analog Figur 1 und als Schnittdarstellung bei erhöhter Temperatur ϑₕ. Hier ist nun eine linienförmige Fixierung 5 der Streifen 3 an dem Blech 2 vorgesehen. Durch diese Fixierung 5 ist jeweils nur eine Kante des betreffenden Streifens 3 mit dem Blech 2 mit der Folge verbunden, dass sich die Streifen 3 bei erhöhter Temperatur ϑₕ. jenseits der Fixierung 5 durch Verformung der Streifen 3 von dem Blech 2 etwa in Form gebogener Leisten abheben. In dieser Position bilden die Streifen 3 einerseits eine zusätzliche Vergrößerung der Oberfläche der Abschirmstruktur 1, die auf dem Blech 2 als Kühlrippen fungieren. Zudem ist eine Oberfläche der Abschirmstruktur 1 nicht länger eben, so dass sich neben einer mechanischen Aufsteifung des Blechs 2 auch eine deutlich veränderte akustische Eigenschaft sowie eine verbesserte Wärmeabgabe einstellt.

In der in Figur 8a angedeuteten Art und Weise muss es sich bei der linienförmigen Fixierung 5 jedes Streifens 3 an dem Blech 2 nicht um eine durchgängige Fixierung handeln. Diese Fixierung 5 ist hier beispielsweise punktförmig oder in Form kurzer Abschnitte ausgeführt, wie durch die unterbrochene Linie in der Abbildung der Figur 8a zeichnerisch angedeutet.

Das Ausführungsbeispiel von Figur 8c wandelt das von Figur 8a dahingehend ab, dass hier die linienförmige Fixierung 5 des Streifens 3 oder Abschnitts 3b an dem Blech 2 nicht länger entlang einer Kante verläuft. Hier verläuft die linienförmige Fixierung 5 vielmehr diagonal über die Länge des Streifens 3 oder Abschnitts 3b. Figur 8d zeigt im Vergleich zu Figur 8b eine mögliche Auswirkung dieser Veränderung darin, dass sich unter Einfluss der erhöhten Temperatur ϑₕ der Streifen 3 oder Abschnitt 3b zu verwinden scheint. Dieser Effekt kann akustisch zur Bedämpfung wie auch mechanisch zur Aufsteifung des Blechs 2 genutzt werden.

Figur 9 stellt ein weiteres alternatives Ausführungsbeispiel als Abwandlung von Figur 8a dar. Hierin bildet ein Element nicht länger einen Streifen 3, sondern einen Abschnitt 3b mit abweichender Geometrie, hier beispielhaft als V-Abschnitt angedeutet. Durch eine linienförmige Fixierung 5 des Abschnitts 3b an Innenkanten KI an dem Blech 2 können sich unter Einfluss der erhöhten Temperatur ϑₕ nun die Außenkanten KA vom Blech 2 abheben, während die Innenkanten KI auf dem Blech 2 verbleiben müssen.

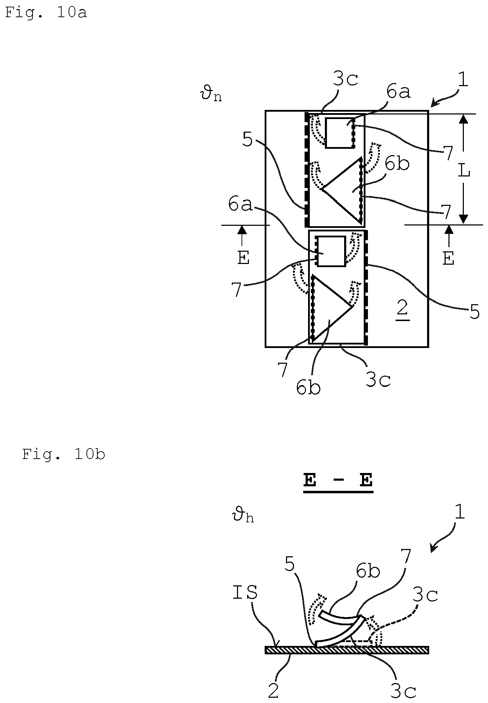

Die Abbildungen der Figuren 10a, 10b zeigen ein weiteres alternatives Ausführungsbeispiel als Abwandlung der Ausführungsbeispiele der Figur 8a. Figur 10a stellt eine Draufsicht analog Figur 1 dar, Figur 10b zeigt eine Darstellung einer Schnittebene E-E der Figur 10a bei einer erhöhten Temperatur ϑₕ. In diesem Ausführungsbeispiel ist nun über eine linienförmige Fixierung 5 der Elemente in Form von Streifen 3 an dem Blech 2 hinaus ein Streifen 3, 3a in Abschnitte 3c einer Länge L aufgeteilt. Ferner ist ein Wechsel hinsichtlich einer jeweils an dem Blech 2 zu fixierenden Kante zwischen angrenzenden Abschnitten 3c vorgesehen. Damit biegen sich die Abschnitte 3c ab einer erhöhten Temperatur ϑₕ gegensinnig und heben sich dabei in wechselnder Weise von dem Blech 2 ab. Ein derartiger Wechsel ist selbstverständlich auch auf eine Anordnung gemäß Figur 8a anwendbar.

Darüber hinaus weist ein Element, hier in Form der Abschnitte 3c, Einschnitte auf, die in diesem Ausführungsbeispiel in Form von Freistanzungen realisiert sind. Beispielhaft werden hier viereckige Freistanzungen 6a sowie dreieckige Freistanzungen 6b in den Abschnitten 3c der Bimetall-Streifen dargestellt. Mögliche Formgebungen sind nicht auf diese geometrischen Basisformen geschränkt und können so auch in ihrer Größe je nach Anwendungsfall z.B. zur Beeinflussung einer akustischen Wirkung auf bestimmte Frequenzbereiche abgestimmt werden. Bei niedrigeren Temperaturen ϑₙ liegen die Abschnitte 3c in diesem Ausführungsbeispiel an jeweils einer Längskante durch eine linienförmige Fixierung 5 gehalten flach und eben auf dem Blech 2 auf.

In einfacher Weise ebenfalls realisierbar, hier aber nicht weiter dargestellt, ist es möglich, die Abschnitte 3c bei niedrigeren Temperaturen ϑₙ von dem Blech 2 abstehen zu lassen, um die Abschnitte 3c sich ab einer erhöhten Temperatur ϑₕ in sonstiger Weise zur Erzielung thermischer und/oder akustischer Effekte zu krümmen. Dabei könnten sich die Abschnitte 3c an das Blech 2 anlegen.

Mit Erreichen einer vorbestimmten erhöhten Temperatur ϑₕ setzt in diesem Ausführungsbeispiel eine Verformung des verwendeten Bimetalls ein, das eine Krümmung in einer Richtung verursacht, wie durch die gepunkteten Pfeile in Figur 10a angedeutet. Eine besondere Behandlung oder Bearbeitung der Freistanzungen 6a, 6b im Bereich einer Verbindungskante 7 zu dem Abschnitt 3c bewirkt eine 3D-Auffaltung jedes der Abschnitte 3c auf dem Blech 2. Ein konvektiv zugänglicher Raum oberhalb des Blechs 2 wird damit noch vergrößert, so dass sich auch eine Wärmeabfuhr weiter verbessert. Die unterschiedlichen Biegungen der Bimetall-Teile im Bereich der Freistanzungen 6a, 6b verstärkt eine Labyrinth-Struktur dieser Anordnung und übt damit einen erhöhten Einfluss auf die akustischen Eigenschaften der gesamten Abschirmstruktur 1 beim Übergang in vorbestimmte Bereiche erhöhter Temperatur ϑₕ aus.

In jedem Fall und über alle Ausführungsbeispiele hinweg kann dieser Wechsel mechanischer Eigenschaften unter Temperatureinwirkung während des Betriebs in unterschiedlichen Fahr-Modi gezielt zur reversiblen Beeinflussung der Struktur mindestens eines Teils einer Abschirmstruktur 1 und somit zugleich als akustisch wirksame Funktion genutzt werden. Dabei sind unterschiedliche Verformungen auch ab verschiedenen Temperaturen ϑₕ₁, ϑₕ₂, ... durch Auswahl, Dimensionierung und Formung sowie sonstige Behandlung der Bimetalle realisierbar.

### Bezugszeichenliste

- 1: Abschirmstruktur
- 2: Blech
- 3: Streifen aus Bimetall
3a Streifen aus Bimetall mit entgegengesetzter Krümmung
3b Abschnitt aus Bimetall mit von Streifen abweichender Flächen-Form
3c Abschnitt eines Streifens mit einer Länge L
- 4: Streifen aus nur einem Metall zur Bildung einer Bimetall-Anordnung zusammen mit dem Blech 2
- 5: linienförmige Fixierung des Streifens 3 oder Abschnitts 3b an dem Blech 2
- 6a: viereckige Freistanzung in dem Streifen 3b aus Bimetall
- 6b: dreieckige Freistanzung in dem Streifen 3b aus Bimetall
- 7: Verbindungskante einer Freistanzung zu dem Abschnitt 3b

- a: Abstand der Streifen 3, 3a, 4
- b: Breite der Streifen 3, 3a, 4
- AS: Außenseite des Blechs 2
- IS: Innenoberfläche des Blechs 2
- KI: Innenkante
- KA: Außenkante
- L: Länge des Abschnitts 3b
- ϑₙ: niedrige Temperatur
- ϑₕ: eine vorbestimmte erhöhte Temperatur einer einsetzenden Verformung eines Bimetalls

## Patentansprüche

1. Abschirmstruktur (1) zum Abschirmen eines Gegenstandes gegen Hitze und/oder Schall, wobei die Abschirmstruktur (1) ein Blech (2) mit einer dem Gegenstand zugewandten Innenoberfläche (IS) und eine dem Gegenstand abgewandten Außenseite (AS) aufweist,
**dadurch gekennzeichnet, dass**
die Innenoberfläche (IS) des Blechs (2) der Abschirmstruktur (1) mit Elementen bestückt ist, die dazu ausgebildet sind, sich oder auch das Blech (2) mit Erreichung mindestens einer vorbestimmten Temperatur (ϑₕ) von einer weichen und damit akustisch mehr bedämpfend funktionierenden zu einer biegesteifen Struktur zu verformen.

2. Abschirmstruktur (1) nach dem vorhergehenden Anspruch, **dadurch gekennzeichnet, dass** eine Verformung der Elemente und/oder des Blechs (2) durch die Elemente als Verrippung ausgebildet ist.

3. Abschirmstruktur (1) nach einem der vorhergehenden Ansprüche, **dadurch gekennzeichnet, dass** eine Verformung der Elemente reversibel ist.

4. Abschirmstruktur (1) nach einem der vorhergehenden Ansprüche, **dadurch gekennzeichnet, dass** die Elemente Bimetall-Abschnitte umfassen oder als Abschnitte aus Bimetall gebildet sind.

5. Abschirmstruktur (1) nach dem vorhergehenden Anspruch, **dadurch gekennzeichnet, dass** die Elemente aus Bimetall-Abschnitten in der Form von Streifen (3, 3a) und/oder länglichen Abschnitten (3b, 3c) bestehen.

6. Abschirmstruktur (1) nach einem der vorhergehenden Ansprüche, **dadurch gekennzeichnet, dass** die Elemente zusammen mit dem Metall des Blechs (2), an und/oder mit dem sie fixiert sind, ein Bimetall bilden.

7. Abschirmstruktur (1) nach einem der vorhergehenden Ansprüche, **dadurch gekennzeichnet, dass** die Elemente in einem Abstand (a) zueinander im Wesentlichen parallel verlaufend ausgerichtet angeordnet und an oder auf dem Blech (2) fixiert sind, vorzugsweise an mindestens einer der Längskanten oder aber diagonal über eine Länge eines Streifens oder Abschnitts verlaufend.

8. Abschirmstruktur (1) nach einem der vorhergehenden Ansprüche, **dadurch gekennzeichnet, dass** zueinander benachbart angeordnete Elemente eine jeweils entgegensetzt gerichtete thermisch induzierte Verformung aufweisen, insbesondere eine thermisch induzierte Krümmung.

9. Abschirmstruktur (1) nach einem der vorhergehenden Ansprüche, **dadurch gekennzeichnet, dass** alle Elemente im gleichen Temperaturbereich einer erhöhten Temperatur (ϑₕ) aktivierbar sind.

10. Abschirmstruktur (1) nach einem der vorhergehenden Ansprüche, **dadurch gekennzeichnet, dass** die Elemente durch Kaltverschweißung, Vernietung, Verklebung und/oder Verschraubung an dem Blech (2) fixiert sind.

11. Abschirmstruktur (1) nach einem der vorhergehenden Ansprüche, **dadurch gekennzeichnet, dass** eine mindestens abschnittsweise linienförmige Fixierung (5) eines Streifens (3) an dem Blech (2) vorgesehen ist, durch die vorzugsweise eine Kante des Streifens (3, 3a) und/oder Abschnitten (3b, 3c) mit dem Blech (2) verbunden ist oder eine Diagonale.

12. Abschirmstruktur (1) nach einem der vorhergehenden Ansprüche, **dadurch gekennzeichnet, dass** Elemente in der Form von Streifen (3, 3a) und/oder Abschnitten (3b, 3c) auf beiden Oberflächen (IS, AS) des Blechs (2) fixiert sind.

13. Abschirmstruktur (1) nach dem vorhergehenden Anspruch, **dadurch gekennzeichnet, dass** Streifen (3, 3a) und/oder Abschnitte (3b, 3c) an gemeinsamen Positionen an dem Blech (2) fixiert sind.

14. Abschirmstruktur (1) nach einem der vorhergehenden Ansprüche, **dadurch gekennzeichnet, dass** ein Element Einschnitte aufweist, vorzugsweise in Form von Freistanzungen (6a, 6b).

15. Abschirmstruktur (1) nach dem vorhergehenden Anspruch, **dadurch gekennzeichnet, dass** eine Freistanzung (6a, 6b) mindestens im Bereich einer Verbindungskante (7) zu dem Element in Form eines Streifens (3, 3a) und/oder Abschnitte (3b, 3c) hin durch eine Behandlung oder Bearbeitung dazu ausgebildet ist, bei einem Übergang in vorbestimmte Bereiche erhöhter Temperatur (ϑₕ) eine 3D-Auffaltung gegenüber dem Blech (2) und/oder dem Streifen (3, 3a) und/oder dem Abschnitt (3b, 3c) zu bewirken.

## Claims

1. Shielding structure (1) for shielding an object against heat and/or sound, wherein the shielding structure (1) comprises a metal sheet (2) with an inner surface (IS) facing the object and an outer surface (AS) facing away from the object,
**characterized in that**
the inner surface (IS) of the sheet metal (2) of the shielding structure (1) is equipped with elements which are designed to deform themselves or also the sheet metal (2) from a soft and thus acoustically more damping structure to a rigid structure when at least one predetermined temperature (ϑₕ) is reached.

2. Shielding structure (1) according to the preceding claim, **characterized in that** a deformation of the elements and/or of the sheet metal (2) by the elements is designed as ribbing.

3. Shielding structure (1) according to one of the preceding claims, **characterized in that** a deformation of the elements is reversible.

4. Shielding structure (1) according to one of the preceding claims, **characterized in that** the elements comprise bimetal sections or are formed as sections of bi-metal.

5. Shielding structure (1) according to the preceding claim, **characterized in that** the elements consist of bi-metal sections in the form of strips (3, 3a) and/or elongated sections (3b, 3c).

6. Shielding structure (1) according to one of the preceding claims, **characterized in that** the elements form a bimetal together with the metal of the sheet (2) to which and/or with which they are fixed.

7. Shielding structure (1) according to one of the preceding claims, **characterized in that** the elements are arranged at a distance (a) from one another, running essentially parallel, and are fixed to or on the sheet metal (2), preferably on at least one of the longitudinal edges or else running diagonally over a length of a strip or section.

8. Shielding structure (1) according to one of the preceding claims, **characterized in that** elements arranged adjacent to one another exhibit a thermally induced deformation directed in opposite directions, in particular a thermally induced curvature.

9. Shielding structure (1) according to one of the preceding claims, **characterized in that** all elements can be activated in the same temperature range of an elevated temperature (ϑₕ).

10. Shielding structure (1) according to one of the preceding claims, **characterized in that** the elements are fixed to the sheet metal (2) by cold welding, riveting, bonding and/or screwing.

11. Shielding structure (1) according to one of the preceding claims, **characterized in that** an at least sectional linear fixation (5) of a strip (3) to the sheet metal (2) is provided, by means of which preferably an edge (5) of the strip (3) is fixed to the sheet metal (2).

12. Shielding structure (1) according to one of the preceding claims, **characterized in that** elements in the form of strips (3, 3a) and/or sections (3b, 3c) are fixed on both surfaces (IS, AS) of the sheet (2).

13. Shielding structure (1) according to the preceding claim, **characterized in that** strips (3, 3a) and/or sections (3b, 3c) are fixed to the sheet (2) at common positions.

14. Shielding structure (1) according to one of the preceding claims, **characterized in that** an element has incisions, preferably in the form of free die-cuttings or punchings (6a, 6b).

15. Shielding structure (1) according to the preceding claim, **characterized in that** a free die-cutting or punching (6a, 6b) at least in the region of a connecting edge (7) to the element in the form of a strip (3, 3a) and/or cutoffs (3b, 3c) is designed by a treatment or processing to cause 3D folding relative to the sheet (2) and/or the strip (3, 3a) and/or the section (3b, 3c) at a transition to predetermined regions of increased temperature (ϑₕ).

## Revendications

1. Structure de protection (1) pour protéger un objet contre la chaleur et/ou le son, la structure de protection (1) comprenant une tôle (2) avec une surface intérieure (IS) tournée vers l'objet et une surface extérieure (AS) opposée à l'objet,
**caractérisé en ce que**
la surface intérieure (IS) de la tôle (2) de la structure de protection (1) est équipée d'éléments qui sont conçus pour se déformer ou pour déformer la tôle (2) lorsqu'au moins une température prédéterminée (ϑₕ) est atteinte, pour passer d'une structure souple et donc plus amortissante sur le plan acoustique à une structure rigide en flexion.

2. Structure de protection (1) selon la revendication précédente, **caractérisée en ce qu'**une déformation des éléments et/ou de la tôle (2) par les éléments est réalisée sous forme de nervures.

3. Structure de protection (1) selon l'une des revendications précédentes, **caractérisée en ce qu'**une déformation des éléments est réversible.

4. Structure de protection (1) selon l'une des revendications précédentes, **caractérisée en ce que** les éléments comprennent des sections bimétalliques ou sont formés comme des sections bimétalliques.

5. Structure de protection (1) selon la revendication précédente, **caractérisée en ce que** les éléments sont constitués de sections bimétalliques sous la forme de bandes (3, 3a) et/ou de sections allongées (3b, 3c).

6. Structure de protection (1) selon l'une des revendications précédentes, **caractérisée en ce que** les éléments sont assemblés avec le métal de la feuille.

7. Structure de protection (1) selon l'une des revendications précédentes, **caractérisée en ce que** les éléments sont disposés à une distance (a) les uns des autres en s'étendant sensiblement parallèlement les uns aux autres et sont fixés à ou sur la tôle (2), de préférence sur au moins l'un des bords longitudinaux ou en s'étendant en diagonale sur une longueur d'une bande ou d'une section.

8. Structure de protection (1) selon l'une des revendications précédentes, **caractérisée en ce que** des éléments disposés de manière adjacente les uns aux autres présentent une déformation induite thermiquement orientée en sens inverse, en particulier une courbure induite thermiquement.

9. Structure de protection (1) selon l'une des revendications précédentes, **caractérisée en ce que** tous les éléments peuvent être activés dans la même plage de température d'une température élevée (ϑₕ).

10. Structure de protection (1) selon l'une des revendications précédentes, **caractérisée en ce que** les éléments sont fixés à la tôle (2) par soudage à froid, rivetage, collage et/ou vissage.

11. Structure de protection (1) selon l'une des revendications précédentes, **caractérisée en ce qu'**il est prévu une fixation (5) linéaire au moins par sections d'une bande (3) sur la tôle (2), par laquelle de préférence un bord de la bande (3, 3a) et/ou des sections (3b, 3c) sont reliés à la tôle (2) ou une diagonale.

12. Structure de protection (1) selon l'une des revendications précédentes, **caractérisée en ce que** des éléments sous la forme de bandes (3, 3a) et/ou de sections (3b, 3c) sont fixés sur les deux surfaces (IS, AS) de la tôle (2).

13. Structure de protection (1) selon la revendication précédente, **caractérisée en ce que** des bandes (3, 3a) et/ou des sections (3b, 3c) sont fixées à des positions communes sur la tôle (2).

14. Structure de protection (1) selon l'une des revendications précédentes, **caractérisée en ce qu'**un élément présent des entailles, de préférence sous la forme de languettes de dégagement ou découpes (6a, 6b).

15. Structure de protection (1) selon la revendication précédente, **caractérisée en ce qu'**une languettes de dégagement ou découpe (6a, 6b) est réalisée au moins dans la zone d'un bord de liaison (7) avec l'élément sous la forme d'une bande (3, 3a) et/ou de découpes (3b, 3b), 3c) vers la tôle (2) et/ou la bande (3, 3a) et/ou le tronçon (3b, 3c) est conçu, par un traitement ou un usinage, pour provoquer un pliage 3D par rapport à la tôle (2) et/ou la bande (3, 3a) et/ou le tronçon (3b, 3c) lors d'un passage dans des zones prédéterminées de température élevée (ϑₕ).
